# EUROPÄISCHE PATENTANMELDUNG

(11) **EP 1 398 143 A1**
(43) Veröffentlichungstag der Anmeldung: **17.03.2004**
(21) Anmeldenummer: 02019882.6
(22) Anmeldetag: 10.09.2002
(51) Int. Cl.: B32B 3/12

(54) **Sandwich-Verbundkörper und Verfahren für die Herstellung eines Sandwich-Verbundkörpers**

(71) Anmelder: Streuber, Fritz Michael, 32120 Hiddenhausen (DE)
(72) Erfinder: Streuber, Fritz Michael, 32120 Hiddenhausen (DE)
(74) Vertreter: Schwabe - Sandmair - Marx

(57) **Zusammenfassung**

Sandwich-Verbundkörper umfassend:
a) zwei Deckschichten (2, 3),
b) eine die Deckschichten (2, 3) verbindende Wabenstruktur (10) aus einem geschäumten oder gegossenem Verbindungsmaterial
c) und poröse Formkörper (6) in den Waben der Wabenstruktur (10).

## Beschreibung

Die Erfindung betrifft Sandwich-Verbundkörper und ein Verfahren zu deren Herstellung. In bevorzugten Verwendungen werden aus den Sandwich-Verbundkörpern Schalenkörper gebildet, beispielsweise ein Boots- oder Schiffsrumpf.

Sandwich-Verbundkörper finden insbesondere im Leichtbau Verwendung, d.h. in Anwendungen, in denen hohe mechanische Festigkeit und geringes spezifisches Gewicht der mechanischen Strukturen gefordert werden, beispielsweise in der Luftfahrttechnik und der Raumfahrttechnik. Aber auch im allgemeinen Fahrzeugbau einschließlich Schiffs- und Bootsbau gewinnen Leichtbaustrukturen zunehmend an Bedeutung. Gefragt sind insbesondere leichtgewichtige Schalenstrukturen, die Aufpralllasten widerstehen. Als Schalenkörper wird hierbei ein dreidimensionales, flächenhaftes Gebilde verstanden, das eine geringe Dicke im Vergleich zu seinen übrigen Abmessungen hat.

Es ist eine Aufgabe der Erfindung, einen Sandwich-Verbundkörper zu schaffen, der bei möglichst hoher mechanischer Festigkeit gegen Aufpralllasten ein möglichst geringes spezifisches Gewicht aufweist und deshalb für die Herstellung von Schalenkörpern geeignet ist.

Ein Sandwich-Verbundkörper umfasst nach der Erfindung zwei Deckschichten, eine die Deckschichten verbindende Wabenstruktur aus einem geschäumten oder gegossenen Verbindungsmaterial und poröse Formkörper in den Waben der Wabenstruktur. Der erfindungsgemäße Sandwich-Verbundkörper weist zwischen den beiden Deckschichten eine mehrphasige und auch mehrfach poröse Struktur auf, nämlich die Wabenstruktur mit den Waben als große Poren und die im Vergleich hierzu kleinere Poren aufweisenden Formkörper. Die Wabenstruktur bildet bereits allein ein tragendes Gerüst. Die porösen Formkörper bilden in dem Gerüst Stützkörper für die Wabenstruktur. Wird die Wabenstruktur von einem geschäumten Verbindungsmaterial gebildet, wie dies bevorzugt wird, so kommt zu diesen beiden Porenstrukturen noch die Porigkeit des Verbindungsmaterials hinzu, das die Wabenstruktur bildet. Die porösen Formkörper verhindern, dass die Wabenstruktur unter auf die Deckschichten wirkenden Druckkräften, wie sie typischerweise unter einer Aufpralllast auftreten, kollabiert. Die porösen Formkörper bilden in diesem Sinne Stützkörper für die Wabenstruktur und erhöhen die Resistenz des Sandwich-Verbundkörpers gegen Aufpralllasten. Sie wirken dem bekannten, beispielsweise von Lorna J. Gibson und Michael F. Ashby in Cellular Solids, second edition, Cambridge University Press, 1997 beschriebenen Mechanismus des Kollabierens der Wabenstruktur, das auf Knicken der Wabenwände zurückzuführen ist, entgegen. Die porösen Formkörper weisen tangential zu den Deckschichten deutlich geringere Abmaße als der Sandwich-Verbundkörper auf, so dass trotz der bevorzugten Starrheit der porösen Formkörper durch bekannte Verfahren der Umformung ausreichend kleine Biegeradien in einem gewölbten Sandwich-Verbundkörper erzielbar sind.

Die Dichte der porösen Formkörper ist vorzugsweise geringer als die Dichte des Verbindungsmaterials der Wabenstruktur und ist vorzugsweise auch geringer als die Dichte des Materials einer geschäumten Wabenstruktur vor dem Schäumen. Die Gewichtszunahme durch die in die Wabenstruktur eingebetteten porösen Formkörper kann daher für Leichtbauanwendungen angesichts der Erhöhung der mechanischen Festigkeit im Vergleich zu einer reinen, nicht ausgefüllten Wabenstruktur hingenommen werden.

Die Form und Anordnung der porösen Formkörper gibt die Geometrie der Wabenstruktur vor. Die porösen Formkörper bilden das Formwerkzeug bei der Herstellung des erfindungsgemäßen Sandwich-Verbundkörpers. Die Geometrie der Wabenstruktur kann daher sehr präzise bei dem Schäumen oder Ausgießen mittels der porösen Formkörper vorgegeben werden. Die Wabenstruktur kann auf einen bestimmten Lastfall oder gegebenenfalls auch mehrere Lastfälle maßgeschneidert werden.

Die Porosität der Formkörper ist vorzugsweise eine geschlossene Porosität. Vorzugsweise handelt es sich um Schaumformkörper. Geeignete Schaummaterialien sind insbesondere Hartschaumstoffe beispielsweise Airex® Hartschaumstoffe der Alcan Airex AG, 5643 Sins, Schweiz und Core Cell Polymerschaum der SP-Systems Deutschland GmbH, Schleswig. Aus den bekannten, beispielsweise in Plattenform erhältlichen Halbzeugen können die porösen Formkörper durch geeignete Trennverfahren, beispielsweise Schneiden, herausgearbeitet werden. Ebenso denkbar ist es jedoch, dass die Formkörper direkt in die gewünschte Form geschäumt werden.

In einer bevorzugten Ausführung sind an den porösen Formkörpern Abstandshalter, vorzugsweise stiftförmig abragende Abstandshalter, geformt. Die Abstandshalter können unmittelbar bei einem Schäumen der porösen Formkörper in ihre Form gebildet werden. Sie können stattdessen auch durch Materialabnahme, vorzugsweise durch Fräsen, geformt werden. Obgleich die porösen Formkörper einzeln vorliegen können, wird es bevorzugt, wenn die Formkörper als komplette Formkörperlage geformt oder aus einem Halbzeug, vorzugsweise aus einem plattenförmigen Halbzeug, durch Materialabnahme erhalten werden. Die Formkörper solch einer zusammenhängenden Formkörperlage sind lediglich über die Abstandshalter miteinander verbunden. So können in ein plattenförmiges Halbzeug zunächst in die beiden Oberflächen die Spalte gefräst werden. Die so erhaltenen, noch flächigen Verbindungsstege werden anschließend ausgefräst, bis nur noch die Abstandshalter als stiftförmige Verbindungsstege verbleiben. Die im Vergleich zu dem derart erhaltenen Flächengebilde dünnen bzw. linienförmigen Abstandshalter behindern eine Umformung der erfindungsgemäßen Verbundkörper, wie sie zum Erhalt eines Schalenkörpers ausgeführt wird, nicht, jedenfalls nicht in einem praktisch relevanten Ausmaß.

Die Wabenstruktur kann mehrlagig sein, d.h. zwei, drei oder auch mehr Lagen von Waben und dementsprechend von porösen Formkörpern aufweisen, vorzugsweise ist zwischen den Deckschichten jedoch nur eine Lage von Waben mit darin eingebetteten Formkörpern gebildet. Der Sandwich-Verbundkörper kann auch mehr als zwei Deckschichten, beispielsweise drei Deckschichten, mit einer Wabenstruktur und eingebetteten Formkörpern zwischen je zwei Deckschichten aufweisen. Bei mehr als zwei Deckschichten muss auch nicht zwischen je zwei benachbarten Deckschichten stets die erfindungsgemäße Struktur gebildet sein. Allerdings weist solch ein Sandwich-Verbundkörper im erweiterten Sinne der Erfindung wenigstens zwischen zwei sich gegenüberliegenden Deckschichten die erfindungsgemäße Struktur auf. Es genügt andererseits jedoch vollauf und wird bevorzugt, wenn der erfindungsgemäße Sandwich-Verbundkörper lediglich zwei Deckschichten und zwischen den Deckschichten die erfindungsgemäße Wabenstruktur in einer einzigen Lage aufweist. Die Deckschichten als solche können in sich mehrschichtig sein, sind vorzugsweise jedoch in sich nur einschichtig. Die Deckschichten sind zueinander vorzugsweise parallel, obgleich auch dies nicht unumgänglich der Fall sein muss.

Die Deckschichten sind vorzugsweise metallisch. Sie können beispielsweise aus Aluminium oder einem anderen Leichtmetall oder einer Leichtmetalllegierung bestehen. Sie können alternativ auch aus organischen Materialien, beispielsweise aus Holz oder Kunststoff bestehen, sofern diese Materialien eine ausreichende Wärmeformbeständigkeit bei den Temperaturen aufweisen, die bei der Bildung der Wabenstruktur auftreten. Im Falle einer geschäumten Wabenstruktur sind dies die Temperaturen des endothermen oder exothermen Schäumvorgangs und der Aushärtung des Schaummaterials, d.h. der Aushärtungsreaktion bei Verwendung eines Harzsystems als Schaummaterial.

Das die Wabenstruktur bildende Verbindungsmaterial ist vorzugsweise ein Kunststoffmaterial. Bevorzugt werden Harzmaterialien. Handelt es sich um ein geschäumtes Material, so wird vorzugsweise ein mit wenigstens einem Treibmittel versehenes Reaktionsharzsystem als Ausgangsmaterial verwendet. Bevorzugt werden physikalische Schäumsysteme. Chemische Schäumsysteme sind jedoch auch geeignet. Gut geeignet sind insbesondere duroplastische Kleber. Auch Schmelzkleber können die Wabenstruktur bilden, um nur eine weitere Materialklasse zu nennen.

Die Verbindung zwischen den Deckschichten und dem Verbindungsmaterial beruht vorzugsweise auf Adhäsion.

Die porösen Formkörper und daher auch die Waben der Wabenstruktur können polygonal oder eine runde Form haben. In einer runden Form sind sie vorzugsweise kugelförmig. In polygonaler Form können sie insbesondere hexagonal sein. Aber auch beispielsweise rauten- oder quaderförmige Formkörper und Waben entsprechen bevorzugten Ausführungsbeispielen. Eine hexagonale Wabenstruktur ist aus der Natur beispielsweise von Kork bekannt.

Für die Herstellung des Sandwich-Verbundkörpers werden die Deckschichten und die porösen Formkörper in der für den Verbund gewünschten Anordnung relativ zueinander positioniert und fixiert, so dass zwischen den beiden Deckschichten ein Hohlraum mit der darin angeordneten Matrix der porösen Formkörper erhalten wird. Die beiden Deckschichten liegen einander vorzugsweise planparallel gegenüber. Die Anordnung der porösen Formkörper in der Matrix ist vorzugsweise regelmäßig, d.h. die Formkörper sind gleich und auch die vorzugsweise durch Abstandshalter definierten Spalte zwischen den Formkörpern sind je gleich dick. Das Gesamtvolumen der porösen Formkörper sollte wesentlich größer sein als das Gesamtvolumen der zwischen ihnen verbleibenden Spalte und auch deutlich größer sein als das Gesamtvolumen des Verbindungsmaterials nach dem Schäumen oder Gießen. Das Verhältnis aus dem Gesamtvolumen der porösen Formkörper und dem Volumen der Wabenstruktur ohne Wabenhohlvolumen sollte den Wert 10 übersteigen. Die Dicke der Spalte zwischen den porösen Formkörpern sollte höchstens ein Zehntel der Spalthöhe und/oder höchstens ein Zehntel der Spaltbreite betragen, wobei die Spalthöhe normal und die Spaltbreite tangential zu den Deckschichten gemessen wird. Von der Bemessungsregel kann am ehesten noch abgewichen werden, wenn aus strukturellen Gründen das Verbindungsmaterial mit Verstärkungskörpem, beispielsweise mit Verstärkungsfasern, versetzt wird.

Das Verbindungsmaterial oder zumindest ein Teil des Verbindungsmaterials wird in bevorzugten Ausführungen des Verfahrens auf eine oder vorzugsweise auf beide Deckschichten aufgebracht, d.h. es wird auf der oder den Deckschichten eine Verbindungsschicht aus dem Verbindungsmaterial gebildet. Zuvor kann die betreffende Deckschicht oder können die betreffenden Deckschichten mit einem Primer beschichtet und dadurch für die weitere Beschichtung mit dem Verbindungsmaterial vorbereitet werden. Die Schicht des Verbindungsmaterials hat vorzugsweise eine teigige oder pastöse Konsistenz. Auf der Schicht des Verbindungsmaterials wird die Matrix der porösen Formkörper gebildet, oder es wird bevorzugterweise eine zusammenhängende Formkörpermatrix darauf abgelegt. Anschließend wird die Matrix der porösen Formkörper mit der anderen der Deckschichten abgedeckt. Die andere der Deckschichten ist vorzugsweise vor dem Abdecken ebenfalls mit einer Primerbeschichtung und einer teigigen oder pastösen Verbindungsschicht aus dem Verbindungsmaterial versehen worden. Um die Resistenz gegen Aufpralllasten zu verbessern, kann eine der Deckschichten oder können beide Deckschichten auf ihrer Verbindungsschicht mit einer Verstärkungsschicht belegt sein. Die Verstärkungsschicht ist vorzugsweise ebenfalls aus Verbindungsmaterial gebildet, in das aber ein oder mehrere Verstärkungskörper eingebettet ist oder sind. Geeignete Verstärkungskörper sind insbesondere Gewebematten und Streckmetallgitter, aber auch einzelne Verstärkungsfasern oder Verstärkungsfaserbündel.

Nach der Schließung des Hohlraums mit der darin befindlichen Matrix aus porösen Formkörpern wird das Verbindungsmaterial in einem bevorzugten Verfahren erwärmt und dadurch zum Schäumen gebracht. Vorzugsweise wird als Verbindungsmaterial ein physikalisches Schaumsystem verwendet, und es werden die Dichte und damit die mechanische Festigkeit der Wabenstruktur mittels der Schäumtemperatur eingestellt. Durch die Schäumtemperatur und die dadurch einstellbare Dichte kann die Menge des zur Bildung der Wabenstruktur erforderlichen Verbindungsmaterials und infolgedessen das Gewicht des Sandwich-Verbundkörpers wunschgemäß eingestellt werden. Das spezifische Gewicht und auch die mechanische Festigkeit der Wabenstruktur können ferner durch Beimischung von Füllstoffen, wie beispielsweise Verstärkungsfasern oder insbesondere Mikrohohlkugeln, den Anforderungen des Gebrauchs noch genauer angepasst werden.

In einem alternativen Verfahren wird die Wabenstruktur durch Ausgießen des Hohlraums mit der darin befindlichen Matrix der porösen Formkörper gebildet. Als gießbares Verbindungsmaterial eignen sich insbesondere Kunstharze, die mit Verstärkungskörpem versehen sein können. Das Ausgießen erfolgt unter Unterdruck, vorzugsweise unter Vakuum.

Das auf der einen Deckschicht oder auf beiden Deckschichten vor der Bildung des Hohlraums aufgetragene Verbindungsmaterial kann bereits das gesamte Verbindungsmaterial der Wabenstruktur des Sandwich-Verbundkörpers bilden. Gegebenenfalls kann jedoch auch flüssiges Verbindungsmaterial nachträglich in den Hohlraum eingebracht werden, vorzugsweise zusätzlich zu bereits auf der Deckschicht oder den Deckschichten vorhandenem Verbindungsmaterial.

Ein schäumbares Verbindungsmaterial kann insbesondere ein Kunstharz oder eine Kunstharzmischung sein, vorzugsweise auf Epoxidharzbasis. Geeignete Harzsysteme werden beispielsweise in der DE 199 092 70 A1 beschrieben. Als schäumbares Verbindungsmaterial geeignet sind grundsätzlich alle Schaummaterialien, sofern das betreffende Verbindungsmaterial nicht durch seine chemische Zusammensetzung oder den zum Aufschäumen erforderlichen Temperatureintrag die Struktur der porösen Formkörper spürbar schädigt.

Das Verbindungsmaterial sollte im Falle des Ausschäumens oder im Falle des Ausgießens eine Schäumtemperatur und/oder Aushärttemperatur haben, die 10 bis 20 ° K unter der Wärmefestigkeit der porösen Formkörper liegt.

In bevorzugter Ausführung wird wenigstens eine Seitenwand des Sandwich-Verbundkörpers von einem Abschlussprofil gebildet. Das Abschlussprofil ist so geformt, dass es die Verbindung des Sandwich-Verbundkörpers mit einem anderen Sandwich-Verbundkörper erleichtert. Vorzugsweise werden sämtliche Seitenwände des Sandwich-Verbundkörpers von je einem derartigen Abschlussprofil gebildet. Dies erleichtert die Bildung von großen Flächenstrukturen, in denen eine große Zahl von Sandwich-Verbundkörpem dicht an dicht nebeneinander angeordnet sind. Die Sandwich-Verbundkörper solch einer Matrix können über ihre Abschlussprofile beispielsweise miteinander verklammert werden.

Die Abschlussprofile können insbesondere auch zur Schließung des auszuschäumenden oder auszugießenden Hohlraums genutzt werden. So können eine beispielsweise quadratische Deckschicht und entsprechend vier Abschlussprofile zu einem kastenförmigen Gebilde gefügt werden. Nach Bildung einer Verbindungsschicht auf der Deckschicht wird die Matrix aus porösen Formkörpern auf der Verbindungschicht oder gegebenenfalls einer Verstärkungsschicht angeordnet. Nach der Bildung der Formkörpermatrix wird der kastenförmige, offene Hohlraum mit der anderen der Deckschichten verschlossen und das gesamte Gebilde wird fixiert. Anschließend kann, wie bereits beschrieben, das Ausschäumen oder Ausgießen vorgenommen werden.

Weitere bevorzugte Merkmale der Erfindung werden auch in den Unteransprüchen beschrieben.

Die Erfindung wird nachfolgend anhand eines Ausführungsbeispiels erläutert. An dem Ausführungsbeispiel offenbar werdende Merkmale bilden einzeln und in jeder Merkmalskombination die Gegenstände der Ansprüche weiter. Es zeigen:
- Figur 1: zwei Teile eines Sandwich-Verbundkörpers,
- Figur 2: eine Matrix von Schaumformkörpern vor Bildung einer Wabenstruktur in einer Sicht auf eine Deckschicht,
- Figur 3: die Matrix der Schaumformkörper zwischen zwei Deckschichten vor der Bildung der Wabenstruktur,
- Figur 4: einen einzelnen Schaumformkörper,
- Figur 5: einen Schnitt durch den Sandwich-Verbundkörper der Figur 1 tangential zu den Deckschichten,
- Figur 6: einen Schnitt durch den Sandwich-Verbundkörper der Figur 1 normal zu den Deckschichten,
- Figur 7: einen Schnitt durch einen Abschnitt eines Sandwichkörpers mit eingebetteten Gewebematten vor der Bildung der Wabenstruktur und
- Figur 8: einen Schalenkörper aus mehreren Sandwich-Verbundkörpern.

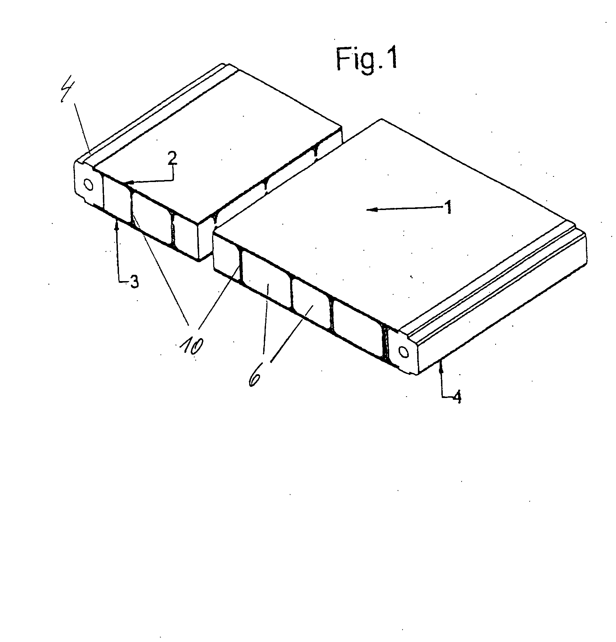

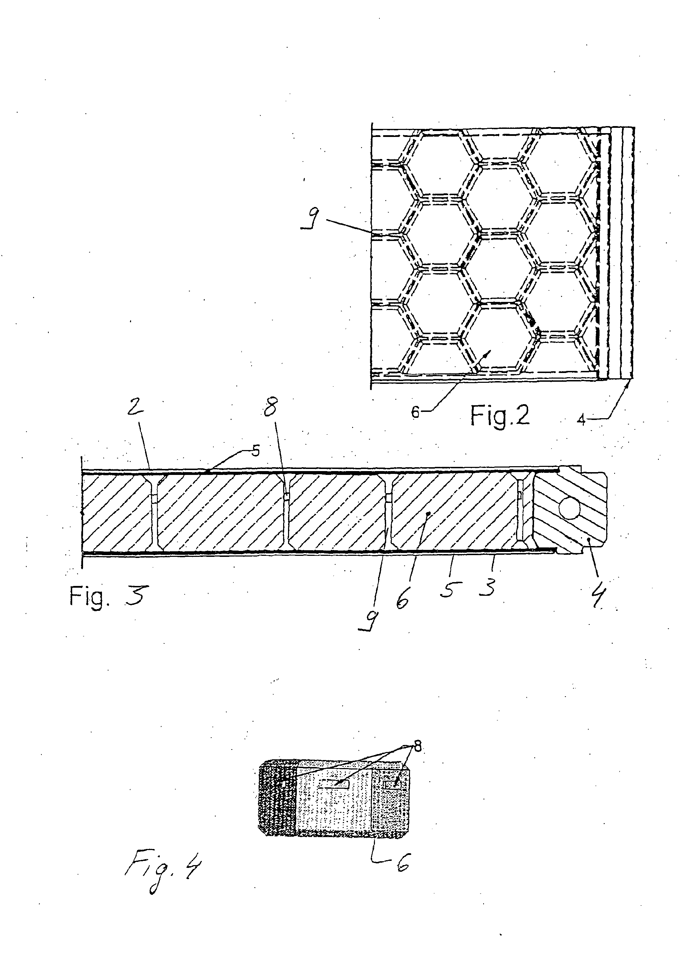

Figur 1 zeigt einen geschnittenen Sandwich-Verbundkörper 1. Der Sandwich-Verbundkörper 1 besteht aus einer oberen Deckschicht 2, einer unteren Deckschicht 3, von Abschlussprofilen 4 gebildeten Seitenwänden, die zusammen mit den beiden Deckschichen 2 und 3 einen Hohlraum einschließen, einer Wabenstruktur 10 und in den Waben der Wabenstruktur 10 angeordneten Schaumformkörpern 6. Die Schaumformkörper 6 und die einhüllende Wabenstruktur 10 füllen den Hohlraum zwischen den Deckschichten 2 und 3 und den Abschlussprofilen 4 aus. Die Schaumformkörper 6 sind hexagonale Prismen, wie aus der Zusammenschau mit Figur 2 erkennbar ist. Die Ausrichtung der Schaumformkörper 6 ist so, dass ihre hexagonalen Flächen tangential zu den planparallelen Deckschichten 2 und 3 weisen. Die Wabenstruktur 10 wird von einem Verbindungsmaterial gebildet, das die Deckschichten 2 und 3 steif miteinander verbindet, indem es mit den Deckschichten 2 und 3 adhäsiv gebondet ist und wegen seiner Wabenstruktur die Verbindungsstege zwischen den Deckschichten 2 und 3 bildet. Die hexagonalen Schaumformkörper 6 werden je dicht von den Waben der Wabenstruktur 10 umhüllt. Sie weisen bei möglichst geringem spezifischen Gewicht eine möglichst hohe mechanische Festigkeit auf. Sie erfüllen die Funktion von Stützkörpern, die Knicken oder ein Beulen der Wabenstruktur im Falle einer normal zu den Deckschichten 2 und 3 wirkenden, hohen Druckbelastung verhindern.

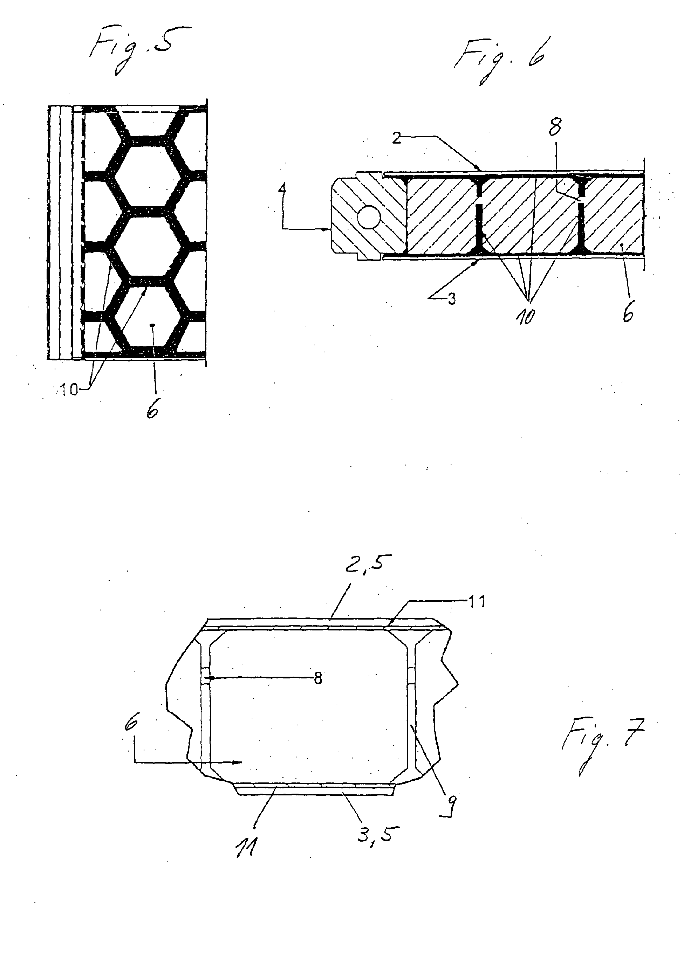

Die Figuren 2 und 3 zeigen einen Sandwichkörper in zwei zueinander senkrechten Schnitten vor der Bildung der Wabenstruktur.

Für die Herstellung des Sandwich-Verbundkörpers werden die beiden plattenförmigen Deckschichten 2 und 3, die je die gleiche Form haben, beispielsweise quadratisch oder gestreckt rechteckig, aus einem entsprechenden Plattenhalbzeug herausgetrennt. Die vorgeformten Abschlussprofile 4 werden auf die erforderliche Länge abgelängt. Die Deckschichten 2 und 3 und die Abschlussprofile 4 werden je mit einer Primerbeschichtung versehen, die ihrer Zusammensetzung nach an das verwendete Verbindungsmaterial angepasst ist. Anschließend wird die eine der Deckschichten mit den Abschlussprofilen 4 gefügt, so dass sie relativ zueinander bereits die gleichen Positionen einnehmen wie im Sandwich-Verbundkörper 1. Die untere Deckschicht 3 und die Abschlussprofile 4 ergeben so einen kastenförmigen Körper. In den Innenraum des kastenförmigen Körpers wird eine definierte Menge eines Harzhalbzeugs 5 in teigiger oder pastöser Konsistenz eingebracht, d.h. auf die untere Deckschicht 3 und gegebenenfalls auch die Abschlussprofile 4 aufgetragen. Das Harzhalbzeug 5 ist ein mit einem physikalischen Treibmittel versehenes Harzsystem, vorzugsweise ein duroplastischer Kleber. Dieses Verbindungsmaterial bildet auf der unteren Deckschicht 3 eine Verbindungsschicht, die als solche in Figur 2 und 3 ebenfalls mit dem Bezugszeichen 5 bezeichnet ist. Eine Verbindungsschicht5 wird ebenso auf der anderen Deckschicht 2 aufgetragen. Um die Resistenz gegen Aufpralllasten zu erhöhen, kann auf die Verbindungsschicht 5 von einer der Deckschichten 2 und 3 oder auf die Verbindungsschicht 5 von jeder der Deckschichten 2 und 3 eine Verstärkungsschicht aufgebracht werden, beispielsweise eine mit dem gleichen oder einem kompatiblen Harzhalbzeug durchsetzte Fasergewebematte oder ein Streckmetallgitter.

Auf die Verbindungsschicht 5 oder die gegebenenfalls darüber gebildete Verstärkungsschicht werden die Schaumformkörper 6 aus einem Hartschaummaterial in der aus den Figuren 2 und 3 ersichtlichen Orientierung aufgesetzt, so dass sie in regelmäßiger Anordnung eine einlagige Matrix aus parallelen nebeneinander angeordneten, hexagonalen Prismen bilden. Die Regelmäßigkeit der Matrix wird durch Abstandshalter 8 gewährleistet. Die Abstandshalter 8 werden unmittelbar von den Schaumformkörpern 6 gebildet und ragen je als dünner Stift von einer der einander zugewandten Seitenwände der Schaumformkörper 6 ab. Nachdem die Schaumformkörper 6 dicht an dicht entsprechend der Länge der Abstandshalter 8 voneinander beabstandet positioniert sind, wie Figur 2 dies zeigt, wird der kastenförmige Raum mit der oberen Deckschicht 2 geschlossen. Die Deckschichten 2 und 3, die dazwischen befindliche Matrix der Schaumformkörper 6 und die Abschlussprofile 4 werden in geeigneter Weise in ihren Positionen, die sie in dem Sandwich-Verbundkörper 1 relativ zueinander einnehmen sollen, durch flächiges Gegeneinanderpressen der Deckschichten 2 und 3 fixiert.

Obgleich die Schaumformkörper 6 als Einzelkörper vorliegen und erst auf der Verbindungsschicht 5 zu der Formkörpermatrix angeordnet werden können, wird es bevorzugt, wenn sie in einer bereits vorher zusammenhängenden Formkörpermatrix vorliegen, in der die Abstandshalter 8 die Verbindungsstege und einzige Verbindung zwischen den benachbarten Schaumformkörpern 6 bilden. Dies erleichtert die Handhabung erheblich.

In diesem Zustand vor dem Ausschäumen zeigt Figur 3 den Vorkörper für den späteren Sandwich-Verbundkörper. Die zwischen den Schaumformkörpern 6 verbleibenden, lichten Spalte 9 sind noch nicht mit Verbindungsmaterial gefüllt.

Die Abschlussprofile 4 sind so geformt, dass sie mit den Deckschichten 2 und 3 überlappende Flächenbereiche bilden, in denen sie mittels des Verbindungsmaterials 5 mit den Deckschichten 2 und 3 gebondet werden. Gegebenenfalls kann die Verbindung durch entsprechende Formgebung der überlappenden Flächen noch verbessert werden.

In dem fixierten Zustand wird der in Figur 3 dargestellte Vorkörper des späteren Sandwich-Verbundkörpers 1 erhitzt. Durch den Wärmeeintrag wird das in dem Hohlraum zwischen den Deckschichten 2 und 3 und den Abschlussprofilen 4 befindliche Verbindungsmaterial 5 geschäumt, so dass es die Spalte zwischen den Schaumformkörpern 6 vollständig ausfüllt und jeden der Schaumformkörper 6 dicht umhüllt. Das Verbindungsmaterial umschließt die Schaumformkörper 6 vollständig und dicht. Zwischen dem Verbindungsmaterial 5 und den Deckschichten 2 und 3 und den Abschlussprofilen 4 entstehen stoffschlüssige Verbindungen. Zwischen dem Verbindungsmaterial 5 und den Schaumformkörpern entstehen ebenfalls stoffschlüssige Verbindungen und aufgrund der Schaumstruktur der Schaumformkörper 6 zusätzlich auch formschlüssige Verbindungen. Nach dem Aushärten bildet das Verbindungsmaterial 5 eine ausreichend feste, vorzugsweise duroplastische Wabenstruktur, die der Struktur von Honigwaben gleicht.

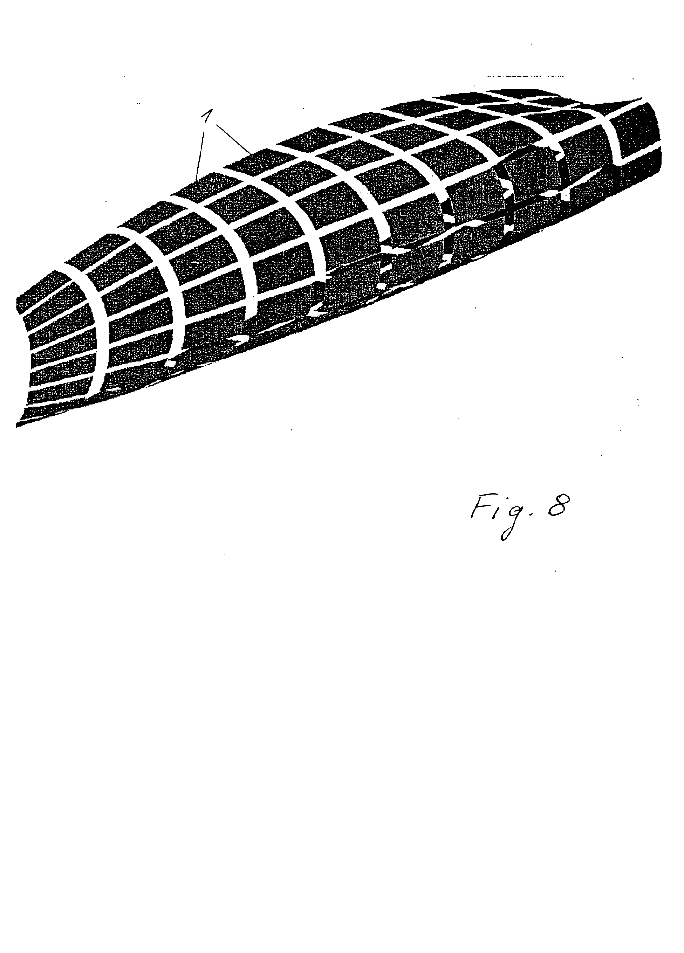

Figur 5 zeigt einen Schnitt durch den Sandwich-Verbundkörper 1 tangential zu den Deckschichten 2 und 3. Figur 6 zeigt die Wabenstruktur 10 in einem Schnitt normal zu den Deckschichten 2 und 3. Die Abstandshalter 8 weisen einen solch geringen Querschnitt auf, dass sie eine Umformung des plattenförmigen, hartzähen und hochfesten Sandwich-Verbundkörpers 1 bei ausreichend kleinen Biegeradien ohne Erwärmung zulassen. Die für die Umformung aufzubringenden Umformkräfte sind so klein, dass die Umformung von Hand ausgeführt werden kann. Hohe Druckkräfte wie bei den bekannten Umformverfahren sind nicht erforderlich. Andererseits soll eine die Umformung unterstützende Erwärmung oder auch der Einsatz der bei den bekannten Verfahren üblichen Drücke nicht von vornherein ausgeschlossen werden.

Falls das in dem Hohlraum des Vorkörpers befindliche Verbindungsmaterial 5 noch nicht ausreicht, kann vor dem Schäumen ergänzendes Verbindungsmaterial in den Hohlraum eingebracht werden. Dies ist in Figur 2 angedeutet, wo ergänzendes Verbindungsmaterial in die Spalte zwischen den Schaumformkörpern 6 eingegeben wurde.

Figur 4 zeigt einen hexagonalen Schaumformkörper 6 einzeln in einer Seitenansicht, in der drei der sechs Seitenflächen des Schaumformkörpers 6 erkennbar sind. Abstandshalter 8 sind an jeder der Seitenflächen gebildet. Die Grundflächen weisen hingegen keine Abstandshalter auf.

Die Erfindung ermöglicht im Ergebnis die Herstellung eines hartzähen und hochfesten Sandwich-Verbundkörpers 1, aus dem durch mechanische Umformung auf sehr einfache Weise ein dreidimensional gewölbter Schalenkörper oder Schalenkörperteil hergestellt werden kann, dessen Eigenschaften aufgrund der Kombination aus Wabenstruktur 10 und die Form der Wabenstruktur vorgebenden Schaumformkörpern 6 flexibel den zu erwartenden Lastfällen angepasst werden können. Durch die als Formwerkzeuge für das Verbindungsmaterial 5 wirkenden Schaumformkörper 6 können gezielt isotrope und/oder anisotrope Eigenschaften des Sandwich-Verbundkörpers eingestellt werden. Auch das spezifische Gewicht des Sandwich-Verbundkörpers 1 im Ganzen kann in weiten Grenzen wunschgemäß eingestellt werden. Als Einstellparameter sind insbesondere das spezifische Gewicht und die äußeren Abmessungen der Schaumformkörper 6 verfügbar. Bei Verwendung eines Schäumsystems als das Verbindungsmaterial 5 kann ferner durch den Wärmeeintrag die Porengröße des geschäumten Verbindungsmaterials 5 und damit das spezifische Gewicht des Sandwich-Verbundkörpers 1 ebenfalls beeinflusst werden. Desweiteren steht die Möglichkeit zur Verfügung, in das Verbindungsmaterial 5 Verstärkungskörper, beispielsweise Hohlkörper einzubringen, um bei ausreichender mechanischer Festigkeit das spezifische Gewicht des Sandwich-Verbundkörpers 1 weiter zu reduzieren.

Figur 7 zeigt als weitere Möglichkeit der Verstärkung die Einbettung von je einer Gewebematte 11 oder eines Streckmetallgitters 11 parallel zu den Deckschichten 2 und 3.

Figur 8 zeigt als Beispiel für einen Schalenkörper einen Bootsrumpf. Der Schalenkörper wird durch aneinander gefügte und miteinander verbundene Sandwich-Verbundkörper 1 gebildet, die vor dem Fügen in die entsprechend ihrem Platz im Schalenkörper passende Form umgeformt wurden. Die einzelnen Sandwich-Verbundkörper sind im Bereich ihrer Abschlussprofile miteinander verbunden.

Beispielhaft werden im folgenden drei Materialkombinationen für den Sandwich-Verbundkörper 1 beschrieben:

### Beispiel 1

Die Deckschichten 2 und 3 sind Aluminiumbleche. Die Abschlussprofile 4 sind Aluminiumprofile. Die Deckschichten 2 und 3 und die Abschlussprofile 4 sind je mit einer Epoxyd-Primer-Beschichtung versehen, die an das verwendete Verbindungsmaterial 5 angepasst ist. Die Schaumformkörper 6 bestehen aus Polyetherimid, Typ R 82.60 der Alcan Airex AG mit einer Dichte von 0,06 g/cm³. Die Schaumformkörper 6 sind bis etwa 200° C wärmeformbeständig. Das Verbindungsmaterial 5 ist ein Reaktionsharzsystem auf Epoxydharzbasis, beispielsweise der Henkel Theroson GmbH, Deutschland, entsprechend der DE 199 09 270 A1 mit einer Rohdichte von 1,27 g/cm³. Dieses Reaktionssatzsystem wird auf 180° C erwärmt, so dass sich eine geschäumte Wabenstruktur 10 mit einer Dichte von 0,5 g/cm³ ergibt. Das so erhaltene Sandwich-Verbundelement 1 hat bei einer Dicke von 20 mm ein Flächengewicht von unter 8 kg/m². Aufgrund seiner hohen Schub- und Scherfestigkeit kann es Spannweiten bis gut 2000 mm überbrücken.

### Beispiel 2

Die Deckschichten 2 und 3 und Abschlussprofile 4 entsprechen denjenigen von Beispiel 1. Sie werden ebenfalls mit einer Epoxyd-Primer-Beschichtung versehen. Ein Aluminiumschaum mit einer Dichte von 0,5 g/cm³ bildet die Schaumformkörper 6. Das Verbindungsmaterial 5 ist eine Reaktionsharzsystem auf Epoxydharzbasis, beispielsweise der Henkel Theroson GmbH, Deutschland entsprechend der DE 199 09 270 A1 mit einer Rohdichte von 1,27 g/cm³. Dieses Verbindungsmaterial 5 wird auf 150° C erwärmt so dass die aufgeschäumte Wabenstruktur 10 eine Dichte von 0,7 g/cm³ aufweist. Das Sandwich-Verbundelement 1 von Beispiel 2 hat bei einer Dicke von 20 mm ein Flächengewicht von unter 16 kg/m². Es ist hochfest und kann aufgrund seiner hohen Schub- und Scherfestigkeit Spannweiten von 2000 mm überbrücken.

### Beispiel 3

Es wird ein Sandwich-Verbundelement 1 entsprechend dem Beispiel 2 gebildet, allerdings wird im Unterschied zu Beispiel 2 das Verbindungsmaterial 5 für das Aufschäumen auf eine Temperatur von 180° C erwärmt. Das Sandwich-Verbundelement 5 von Beispiel 3 ist wie dasjenige von Beispiel 2 hochfest und hat bei einer Dicke von 20 mm ein Flächengewicht von unter 15 kg/m². Durch seine hohe Schub- und Scherfestigkeit kann es ebenfalls Spannweiten von 2000 mm überbrücken.

## Patentansprüche

1. Sandwich-Verbundkörper umfassend:
a) zwei Deckschichten (2, 3),
b) eine die Deckschichten (2, 3) verbindende Wabenstruktur (10) aus einem geschäumten oder gegossenem Verbindungsmaterial
c) und poröse Formkörper (6) in den Waben der Wabenstruktur (10).

2. Sandwich-Verbundkörper nach Anspruch 1, **dadurch gekennzeichnet, dass** das Verbindungsmaterial eine Schaumstruktur hat.

3. Sandwich-Verbundkörper nach einem der vorhergehenden Ansprüche, **dadurch gekennzeichnet, dass** das Verbindungsmaterial ein Kunststoffmaterial ist oder enthält.

4. Sandwich-Verbundkörper nach dem vorhergehenden Anspruch, **dadurch gekennzeichnet, dass** das Verbindungsmaterial ein Kunstharzmaterial ist oder enthält.

5. Sandwich-Verbundkörper nach einem der vorhergehenden Ansprüche, **dadurch gekennzeichnet, dass** die Wabenstruktur (10) duroplastisch ist.

6. Sandwich-Verbundkörper nach einem der vorhergehenden Ansprüche, **dadurch gekennzeichnet, dass** das Verbindungsmaterial Füllkörper, vorzugsweise Mikrohohlkörper und/oder Verstärkungsfasern, enthält.

7. Sandwich-Verbundkörper nach einem der vorhergehenden Ansprüche, **dadurch gekennzeichnet, dass** in dem Verbindungsmaterial wenigstens eine verstärkende Gewebematte (11) oder wenigstens ein verstärkendes Streckmetallgitter (11) eingebettet ist.

8. Sandwich-Verbundkörper nach einem der vorhergehenden Ansprüche, **dadurch gekennzeichnet, dass** die porösen Formkörper (6) Schaumformkörper sind.

9. Sandwich-Verbundkörper nach einem der vorhergehenden Ansprüche, **dadurch gekennzeichnet, dass** die porösen Formkörper (6) oder ein Teil der porösen Formkörper (6) polygonale Körper sind, vorzugsweise hexagonale Körper, Rautenkörper oder Quaderkörper.

10. Sandwich-Formkörper nach einem der vorhergehenden Ansprüche, **dadurch gekennzeichnet, dass** die porösen Formkörper (6) oder ein Teil der porösen Formkörper (6) runde Körper sind, vorzugsweise Kugelkörper.

11. Sandwich-Formkörper nach einem der vorhergehenden Ansprüche, **dadurch gekennzeichnet, dass** an den porösen Formkörpern (6) je wenigstens ein Abstandshalter (8) geformt ist.

12. Sandwich-Verbundkörper nach einem der vorhergehenden Ansprüche, **dadurch gekennzeichnet, dass** die Deckschichten (2, 3) dünne metallische Platten oder Holzplatten oder Kunststoffplatten sind.

13. Sandwich-Verbundkörper nach einem der vorhergehenden Ansprüche, **dadurch gekennzeichnet, dass** ein mit den Deckschichten (2, 3) gefügtes und mit der Wabenstruktur (10) verbundenes Abschlussprofil (4) eine Seitenwand des Sandwich-Verbundkörpers (1) bildet.

14. Sandwich-Verbundkörper nach einem der vorhergehenden Ansprüche, **dadurch gekennzeichnet, dass** der Sandwich-Verbundkörper (1) einen Schalenkörper bildet.

15. Schalenkörper, der aus mehreren Sandwich-Verbundkörpern (1) nach einem der vorhergehenden Ansprüche gebildet wird, die je von Abschlussprofilen (4) gebildete Seitenwände aufweisen, an denen die Sandwich-Verbundkörper (1) zu dem Schalenkörper miteinander verbunden sind.

16. Verfahren für die Herstellung eines Sandwich-Verbundkörpers (1), bei dem
a) zwischen zwei Deckschichten (2, 3) ein Hohlraum mit in dem Hohlraum zu einer Matrix angeordneten, je voneinander beabstandeten porösen Formkörpern (6) gebildet und
b) mit einem Verbindungsmaterial (5) ausgeschäumt oder ausgegossen wird, so dass das Verbindungsmaterial (5) in dem Hohlraum eine mit den Deckschichten (2, 3) verbundene Wabenstruktur (10) bildet, in deren Waben die porösen Formkörper (6) angeordnet sind.

17. Verfahren nach dem vorhergehenden Anspruch, **dadurch gekennzeichnet, dass** auf wenigstens eine der Deckschichten (2, 3) vor der Bildung des Hohlraums wenigstens eine Verbindungsschicht aufgebracht wird, die das Verbindungsmaterial (5) enthält.

18. Verfahren nach dem vorhergehenden Anspruch, **dadurch gekennzeichnet, dass** die wenigstens eine das Verbindungsmaterial (5) enthaltende Verbindungsschicht in einer teigigen oder pastösen Konsistenz aufgebracht wird.

19. Verfahren nach einem der zwei vorhergehenden Ansprüche, **dadurch gekennzeichnet, dass** in oder auf die wenigstens eine das Verbindungsmaterial (5) enthaltende Verbindungsschicht eine verstärkende Gewebematte (11) oder ein verstärkendes Metallgitter (11) gebettet wird.

20. Verfahren nach einem der drei vorhergehenden Ansprüche, **dadurch gekennzeichnet, dass** die porösen Formkörper (6) auf der wenigstens einen das Verbindungsmaterial (5) enthaltenden Verbindungsschicht zu der Matrix angeordnet werden, wobei die porösen Formkörper (6) in der Matrix mittels Abstandshalter (8) voneinander beabstandet werden.

21. Verfahren nach einem der vorhergehenden Ansprüche, **dadurch gekennzeichnet, dass** das gesamte Verbindungsmaterial (5) vor der Bildung des Hohlraums auf die Deckschichten (2, 3) und gegebenenfalls auf Abschlussprofile (4) aufgetragen wird, die den Hohlraum zusammen mit den Deckschichten (2, 3) als Seitenwände begrenzen.

22. Verfahren nach einem der Ansprüche 16 bis 20, **dadurch gekennzeichnet, dass** ein Teil des Verbindungsmaterials oder das gesamte Verbindungsmaterial nach der Bildung des Hohlraums in einer fließfähigen Konsistenz in den Hohlraum eingebracht wird.

23. Verfahren nach einem der vorhergehenden Ansprüche, **dadurch gekennzeichnet, dass** als das Verbindungsmaterial (5) ein duroplastisch aushärtendes Klebematerial verwendet wird.

24. Verfahren nach einem der vorhergehenden Ansprüche, **dadurch gekennzeichnet, dass** als das Verbindungsmaterial (5) ein mit Treibmittel versetztes Reaktionsharzmaterial verwendet wird.

25. Verfahren nach einem der Ansprüche 16 bis 22, **dadurch gekennzeichnet, dass** als das Verbindungsmaterial (5) ein Schmelzkleber verwendet wird.

26. Verfahren nach einem der vorhergehenden Ansprüche, **dadurch gekennzeichnet, dass** aus einer der Deckschichten (2, 3) und aus Abschlussprofilen (4), die an den Seitenkanten der einen der Deckschichten (2, 3) angeordnet werden, ein einseitig offener Innenraum gebildet wird, in dem die porösen Formkörper (6) zu der Matrix angeordnet werden, und dass die andere der Deckschichten (2, 3) nach Bildung der Formkörpermatrix mit den Abschlussprofilen (4) gefügt wird, um den einseitig offenen Innenraum zu verschließen.

27. Verfahren nach einem der vorhergehenden Ansprüche, **dadurch gekennzeichnet, dass** das in dem Hohlraum enthaltene Verbindungsmaterial (5) durch Wärmeeintrag zu der Wabenstruktur (10) geschäumt wird.
